(19) Europäisches Patentamt
European Patent Office
Office européen des brevets

(11) **EP 3 202 612 B1**

(12) **EUROPÄISCHE PATENTSCHRIFT**

(45) Veröffentlichungstag und Bekanntmachung des Hinweises auf die Patenterteilung:
**17.06.2020   Patentblatt 2020/25**

(21) Anmeldenummer: **17152998.5**

(22) Anmeldetag: **25.01.2017**

(51) Int Cl.:
***B60L 13/03*** *(2006.01)*

(54) **VERFAHREN ZUM BETREIBEN EINER FÖRDEREINRICHTUNG IN FORM EINES LANGSTATORLINEARMOTORS**

METHOD FOR OPERATING A CONVEYING DEVICE IN THE FORM OF A LONG STATOR LINEAR MOTOR

PROCÉDÉ DE FONCTIONNEMENT D'UN DISPOSITIF DE TRANSPORT EN FORME DE MOTEUR LINÉAIRE À STATOR LONG

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.02.2016   AT 500582016**

(43) Veröffentlichungstag der Anmeldung:
**09.08.2017   Patentblatt 2017/32**

(73) Patentinhaber: **B&R Industrial Automation GmbH**
**5142 Eggelsberg (AT)**

(72) Erfinder:
• **Huber, Stefan**
  **5020 Salzburg (AT)**
• **Herzog, Helmut**
  **5020 Salzburg (AT)**

(74) Vertreter: **Patentanwälte Pinter & Weiss OG**
**Prinz-Eugen-Straße 70**
**1040 Wien (AT)**

(56) Entgegenhaltungen:
**JP-A- H0 837 707     JP-A- S6 352 607**
**US-B2- 8 863 669**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die gegenständliche Erfindung betrifft ein Verfahren zum Betreiben einer Fördereinrichtung in Form eines Langstatorlinearmotors bei der eine Mehrzahl von Transporteinheiten entlang einer Förderstrecke bewegt werden, wobei die Bewegung der Transporteinheiten entlang der Förderstrecke durch eine Vorgabe von Sollwerten der Bewegung durch zumindest eine Transporteinheitenregelung geregelt wird.

Langstatorlinearmotoren werden oftmals als flexible Fördereinrichtungen in Herstellungs-, Bearbeitungs-, Montageanlagen, und ähnlichen Anlagen, verwendet. Ein Langstatorlinearmotor besteht bekanntermaßen im Wesentlichen aus einem Langstator in Form einer Vielzahl hintereinander angeordneter Antriebsspulen und einer Vielzahl von Transporteinheiten mit Erregungsmagneten (Permanent- oder Elektromagnete), die entlang des Langstators bewegt werden, indem die Antriebsspulen entsprechend mit einem elektrischen Strom beaufschlagt werden. Durch die Antriebsspulen wird ein bewegtes Magnetfeld erzeugt, das mit den Erregungsmagneten an den Transporteinheiten zusammenwirkt, um die die Transporteinheiten zu bewegen. Durch den Langstator wird somit eine Förderstrecke ausgebildet, entlang der die Transporteinheiten bewegt werden können. Damit ist es möglich jede Transporteinheit einzeln und unabhängig voneinander in ihrer Bewegung (Position, Geschwindigkeit, Beschleunigung) zu regeln. Dazu wird jede Antriebsspule durch einen zugeordneten Antriebsspulenregler angesteuert, der Vorgaben zur Bewegung einer Transporteinheit (z.B. in Form von Sollwerten für Position oder Geschwindigkeit) von einer übergeordneten Anlagensteuereinheit erhalten kann. Dabei können entlang der Förderstrecke auch Weichen des Langstatorlinearmotors vorgesehen sein. Oftmals ist der Langstator auch in Form von Fördersegmenten aufgebaut, wobei jedes Fördersegment einen Teil der Förderstrecke bildet und eine Anzahl von Antriebsspulen enthält. Meistens ist für ein Fördersegment ein Segmentregler vorgesehen, der alle Antriebsspulen des Fördersegments regelt. Die konstruktive Ausgestaltung des Langstatorlinearmotors, also z.B. die Ausführung der Antriebsspulen, der Förderstrecke, der Transporteinheiten, der Führungen der Transporteinheit, usw., und das Regelungskonzept können natürlich verschieden sein, wobei das grundlegende Funktionsprinzip eines Langstatorlinearmotors aber gleich bleibt.

Eine Fördereinrichtung in Form eines Langstatorlinearmotors kann durchaus komplex werden mit mehreren Transportabschnitten, die durch Weichen miteinander verbunden sein können. Darauf können auch eine hohe Anzahl von Transporteinheiten gleichzeitig bewegt werden. Eine solche Fördereinrichtung stellt damit hohe Anforderungen an die Steuerung der Bewegung der einzelnen Transporteinheiten. Insbesondere müssen in der Regel Vorkehrungen getroffen werden, dass einzelne Transporteinheiten während deren Bewegung nicht miteinander kollidieren.

Die US 8,863,669 B2 beschreibt beispielsweise eine Fördereinrichtung in Form eines Langstatorlinearmotors mit einer Steuerung der Bewegung der Transporteinheiten. Darin wird die Förderstrecke in Zonen eingeteilt, wobei eine Transporteinheit in einer sollwertbasierten Zone anhand einer Sollwertvorgabe gesteuert wird und in einer grenzwertbasierten Zone mittels Vorgaben für die Endposition und Maximalwerten für die Geschwindigkeit und Beschleunigung gesteuert wird. Bei der grenzwertbasierten Steuerung werden diese Vorgaben in ein Bewegungsprofil umgewandelt, mit dem die Transporteinheit bewegt wird. Die US 8,863,669 B2 erwähnt auch, dass Kollisionen der Transporteinheiten zu vermeiden sind, wobei aber keine Ausführungen gemacht werden, wie das erreicht wird.

Ebenso können entlang der Förderstrecke Barrieren auftreten, die von einer Transporteinheit nicht überfahren werden dürfen. Solche Barrieren können echte, physische Barrieren, beispielsweise in Form des Endes eines Förderabschnitts, oder logische Barrieren, beispielsweise eine Weiche, die gerade von einer anderen Transporteinheit befahren wird, oder ein Fördersegment, in dem kein Platz mehr für eine weitere Transporteinheit ist, sein. Barrieren können auch anwendungsbezogen, auch temporär, von der übergeordneten Anlagensteuereinheit gesetzt werden. Auch Barrieren dürfen im laufenden Betrieb von einer Transporteinheit nicht überfahren werden.

Nicht zuletzt kann es entlang der Förderstrecke auch lokale Geschwindigkeitsgrenzen geben, die von einer Transporteinheit nicht verletzt werden dürfen, beispielsweise eine maximale Geschwindigkeit in einer Kurve, um eine maximale Fliehkraft nicht zu überschreiten.

Es ist eine Aufgabe der gegenständlichen Erfindung, ein Verfahren anzugeben, mit dem auf einfache Weise eine Kollision von Transporteinheiten, die entlang einer Förderstrecke eines Langstatorlinearmotors bewegt werden, und/oder die Kollision einer Transporteinheit mit einer Barriere und/oder das Überschreiten einer lokalen Geschwindigkeitsgrenze verhindert werden kann.

Diese Aufgabe wird dadurch gelöst, dass für zumindest eine erste Transporteinheit vorausschauend ermittelt wird, ob für die Transporteinheit ein Stillstandsmanöver mit vorgegebener Kinematik durchgeführt werden kann, sodass eine Kollision dieser Transporteinheit mit einer davor fahrenden zweiten Transporteinheit oder mit einer Barriere der Förderstrecke verhindert wird, oder das Überschreiten einer vorgegebenen lokalen Geschwindigkeitsbeschränkung an einer Stelle der Förderstrecke durch die erste Transporteinheit verhindert wird, oder eine Angleichsbewegung der ersten Transporteinheit auf eine Geschwindigkeit einer davor fahrenden zweiten Transporteinheit möglich ist, und das Stillstandsmanöver der ersten Transporteinheit tatsächlich eingeleitet wird, wenn zumindest eine dieser Bedingungen verletzt wird. Durch die vorausschauende Berechnung von Stillstandsmanövern und der dabei erfolgenden Überprüfung auf die Verletzung der Sicherheitsvorgaben, kann sichergestellt werden, dass eine Transporteinheit gestoppt werden kann, ohne in Konflikt mit einer anderen Transporteinheit, einer Barriere oder einer Geschwindigkeitsbegrenzung zu kommen. Droht eine Verletzung einer Sicherheitsvorgabe, wird die Transporteinheit tatsächlich gestoppt.

In einer bevorzugten Ausgestaltung wird für die davor fahrende zweite Transporteinheit ein Stillstandsmanöver angenommen wird und geprüft, ob die erste Transporteinheit bei einem angenommenen Stillstandsmanöver der zweiten Transporteinheit zu nahe kommt. Im Normalfall wird ein Stillstandsmanöver so rasch wie möglich durchgeführt. Kann eine Kollision bei einem Stillstandsmanöver der davor fahrenden zweiten Transporteinheit verhindert werden, kann daher angenommen werden, dass bei normalen Fahrmanövern ebenfalls eine Kollision verhindert werden kann.

In einer einfach umzusetzenden Realisierung werden für die erste Transporteinheit und für die zweite Transporteinheit aus der Kenntnis der kinematischen Umsetzung des jeweiligen Stillstandsmanövers jeweils ein Stillstandpunkt oder ein Stillstandsweg berechnet und diese verglichen, um festzustellen, ob sich die erste Transporteinheit und die zweite Transporteinheit zu nahe kommen.

Um ortsfeste Barrieren zu berücksichtigen kann überprüft werden, ob die erste Transporteinheit bei einem angenommenen Stillstandsmanöver der Barriere zu nahe kommt. Damit wird sichergestellt, dass eine Transporteinheit immer rechtzeitig vor einer Barriere gestoppt werden kann.

Die Sicherheit kann erhöht werden, wenn ein Mindestabstand vorgegeben wird, der angibt, wie nahe die Transporteinheit der davor fahrenden Transporteinheit oder der Barriere kommen darf.

Die Einhaltung einer Geschwindigkeitsbegrenzung kann auf einfache Weise kontrolliert werden, wenn überprüft wird, ob die Geschwindigkeit der ersten Transporteinheit bei einem angenommenen Stillstandsmanöver von einer aktuellen Istgeschwindigkeit auf eine durch die Geschwindigkeitsbegrenzung vorgegebene Grenzgeschwindigkeit abgesenkt werden kann, ohne dass die erste Transporteinheit dem definierten Bereich der Geschwindigkeitsbegrenzung zu nahe kommt. Damit wird sichergestellt, dass eine Transporteinheit immer auf eine festgelegte Geschwindigkeit verzögert werden kann, ohne dass es zu einer Verletzung einer Geschwindigkeitsbegrenzung kommen kann. In einer einfachen zu realisierenden Umsetzung wird für die erste Transporteinheit aus der Kenntnis der kinematischen Umsetzung des Stillstandsmanövers ein Geschwindigkeitspunkt oder ein Bremsweg berechnet und damit ermittelt, ob die Geschwindigkeit der Transporteinheit vor dem Bereich der Geschwindigkeitsbegrenzung auf die Grenzgeschwindigkeit abgesenkt werden kann.

Eine Kollision kann auch durch ein Angleichsmanöver verhindert werden, wenn überprüft wird, ob die Geschwindigkeit der ersten Transporteinheit bei einem angenommenen Stillstandsmanöver von einer aktuellen Istgeschwindigkeit auf eine Geschwindigkeit der zweiten Transporteinheit abgesenkt werden kann, sodass zwischen der ersten und zweiten Transporteinheit ein Sicherheitsabstand, der sich aus der konkreten kinematischen Umsetzung des Stillstandsmanövers ergibt, eingehalten wird. Damit wird sichergestellt, dass die Geschwindigkeit der ersten Transporteinheit immer auf die Geschwindigkeit der zweiten Transporteinheit abgesenkt werden kann, ohne dass es zu einer Kollision kommen kann. In einer einfachen zu realisierenden Umsetzung wird für die erste Transporteinheit aus der Kenntnis der kinematischen Umsetzung des Stillstandsmanövers ein Geschwindigkeitspunkt oder ein Angleichsweg berechnet und damit ermittelt, ob die Geschwindigkeit der Transporteinheit auf die Geschwindigkeit der zweiten Transporteinheit abgesenkt werden kann.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 ein Ausführungsbeispiel einer Fördereinrichtung,
Fig.2 ein Beispiel einer erfindungsgemäßen Kollisionsvermeidung über Stillstandsmanöver,
Fig.3 ein Beispiel einer erfindungsgemäßen Einhaltung einer Geschwindigkeitsbegrenzung,
Fig.4 ein Beispiel einer erfindungsgemäßen Angleichsbewegung,
Fig.5 das Einhalten einer Geschwindigkeitsbegrenzung über eine Angleichsbewegung,
Fig.6 und 7 die Behandlung von Weichen bei der Überwachung der Sicherheitsvorgaben und
Fig.7 eine Implementierung einer Transporteinheitenregelungen mit Phasenraumlimitierung.

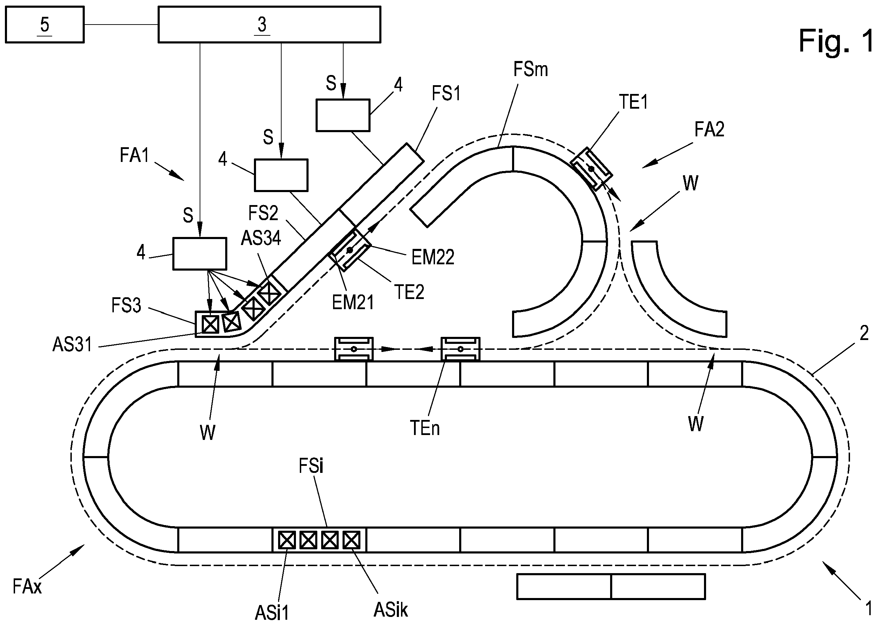

In Fig.1 ist ein beispielhaft ein beliebiger Aufbau einer Fördereinrichtung 1 mit einer Förderstrecke 2 (angedeutet durch die strichlierte Linie) dargestellt. Die Fördereinrichtung 1 ist als Langstatorlinearmotor ausgeführt und es sind eine Vielzahl von Transporteinheiten TEi, i=1, ..., x vorgesehen, die entlang der Förderstrecke 2 bewegt werden können. Die Förderstrecke 2 wird im Wesentlichen durch den Langstator des Langstatorlinearmotors 1 vorgegeben. Im gezeigten Ausführungsbeispiel sind eine Reihe von Fördersegmente FSi, i=1, ..., y vorgesehen, die die Bahn der Transporteinheiten TEi, also die Förderstrecke 2, definieren. Einzelne Förderabschnitte FAi, i=1, ..., z der Förderstrecke 2 werden durch eine Anzahl von nebeneinander angeordneten Fördersegmente FSi gebildet. Die Fördersegmente FSi, und damit auch die Förderabschnitte FAi, bilden dabei einen Teil des Langstators des Langstatorlinearmotors. Die Fördersegmente FSi sind in einer geeigneten Konstruktion ortsfest angeordnet und bilden in der Regel auch Führungselemente aus, entlang denen die Transporteinheit TEi geführt werden können. Jeder Förderabschnitt FAi umfasst zumindest ein Fördersegment FSi, normalerweise mehrere Fördersegmente FSi. Einzelne Förderabschnitte FAi, bzw. Fördersegmente FSi einzelner Förderabschnitte FAi (wie z.B. die Fördersegmente FS1, FSm), können sich entlang der Förderstrecke 2 zum Teil auch überlappen, insbesondere an Stellen der Förderstrecke 2 an der ein Übergang von einem Förderabschnitt FAi auf einen anderen Förderabschnitt FAi (wie z.B. vom Förderabschnitt FA1 auf den Förderabschnitt FA2) stattfindet. Es kann auch vorgesehen sein, dass abschnittsweise an beiden Seiten der Förderstrecke 2 Fördersegmente FSi angeordnet sind. Es können auch Weichen W vorgesehen sein, an denen (je nach Förderrichtung einer Transporteinheit TEi) zwei Förderabschnitte FAi zusammengeführt werden oder eine Aufteilung auf zwei Förderabschnitte FAi stattfindet. Es ist nachvollziehbar, dass damit eine nahezu beliebig aufgebaute Förderstrecke 2 gebildet werden kann, die sich auch nicht nur in einer zweidimensionalen Ebene befinden muss, sondern sich auch dreidimensional erstrecken kann.

Jedes Fördersegment FSi umfasst eine Anzahl k von Antriebsspulen ASij, j=1, ..., k, wobei die Anzahl k nicht bei jedem Fördersegmente FSi gleich sein muss. In Fig.1 sind der Übersicht halber nur Antriebsspulen ASij einiger Fördersegmente FSi dargestellt. Jede Transporteinheit TEi umfasst eine Anzahl von Erregungsmagnete EMij, j=1, ..., l, vorzugsweise an beiden Seiten (bezogen auf die Förderrichtung, die durch die Pfeile an den Transporteinheiten TEi angedeutet ist) der Transporteinheit TEi. Die Antriebsspulen ASij erzeugen ein bewegtes Magnetfeld und wirken im Betrieb der Fördereinrichtung 1 in bekannter Weise nach dem Motorprinzip mit den Erregungsmagneten EMij der Transporteinheiten TEi zusammen. Werden die Antriebsspulen ASij im Bereich einer Transporteinheit TEi mit einem Spulenstrom bestromt, entsteht ein magnetischer Fluss der in Zusammenwirken mit den Erregungsmagneten EMij eine Kraft auf die Transporteinheit TEi. Diese Kraft kann je nach Spulenstrom bekanntermaßen eine vortriebskraftbildende und eine seitenkraftbildende Kraftkomponenten umfassen. Die vortriebskraftbildende Kraftkomponente dient im Wesentlichen der Bewegung der Transporteinheit TEi und die seitenkraftbildende Kraftkomponente kann zur Führung der Transporteinheit TEi, aber auch zur Festlegung der Bahn der Transporteinheit TEi in einer Weiche W genutzt werden. Auf diese Weise kann jede Transporteinheit TEi einzeln und unabhängig voneinander entlang der Förderstrecke 2 bewegt werden, indem die Antriebsspulen ASij im Bereich jeder Transporteinheit TEi gemäß der durchzuführenden Bewegung mit einem entsprechenden Spulenstrom bestromt werden.

Diese grundlegende Funktionsweise eines Langstatorlinearmotors ist hinlänglich bekannt, sodass nicht weiter darauf eingegangen wird. Für die gegenständliche Erfindung ist es auch unerheblich, wie die Transporteinheiten TEi, die Fördersegmente FSi, die Antriebsspulen ASij, die Erregungsmagnete EMij, usw. konstruktiv konkret ausgestaltet sind, weshalb auch darauf nicht näher eingegangen wird.

Um die Bewegung der einzelnen Transporteinheiten TEi zu steuern ist eine Transporteinheitenregelung 3 vorgesehen, in der die Sollwerte S für die Bewegung der Transporteinheiten TEi generiert werden. Selbstverständlich können gleichwertig auch mehrere Transporteinheitenregelungen 3 vorgesehen sein, die jeweils einem Teil der Fördereinrichtung 1, z.B. einem Förderabschnitt FAi, zugeordnet sind und die Bewegung der Transporteinheiten TEi auf diesem Teil kontrollieren. Zusätzlich können noch Segmentregelungseinheiten 4 vorgesehen sein, die einem Fördersegment FSi (oder auch mehreren Fördersegmenten FSi oder auch einem Teil eines Fördersegments FSi) zugeordnet sind und die die Sollwertvorgaben der zugehörigen Transporteinheitenregelung 3 für eine Transporteinheit TEi in Spulenströme für die Antriebsspulen ASij des Fördersegments FSi, also in konkrete Stellgrößen, umsetzen. Die Segmentregelungseinheiten 4 könnten aber auch in einer Transporteinheitenregelung 3 implementiert sein. Als Sollwerte S werden Positionen p der Transporteinheiten TEi, oder gleichwertig auch Geschwindigkeiten v, vorgegeben. Das bedeutet, dass in jedem Taktschritt n der Regelung für jede Transporteinheit TEi ein neuer Sollwert S berechnet wird, der durch die Segmentregelungseinheiten 4 eingeregelt wird. In einer Segmentregelungseinheit 4 ist demnach ein geeigneter Regler implementiert, der die Sollwertvorgabe in eine geeignete Stellgröße, beispielsweise in eine Kraft oder einen Spulenstrom, umsetzt. Die gewünschte Bewegung der Transporteinheiten TEi entlang der Förderstrecke 2 kann auch durch eine Fördereinrichtungsregelung 5 vorgegeben werden, in der beispielsweise eine Routenberechnung (z.B. welchen Weg soll einer Transporteinheit TEi nehmen?), eine Weichenarbitrierung (z.B. welche Transporteinheit TEi darf in eine Weiche einfahren?), eine Deadlockvermeidung (z.B. blockieren sich zwei Transporteinheiten TEi gegenseitig?), usw. stattfinden kann, um die Transporteinheiten TEi auf gewünschte Weise entlang der Förderstrecke 2 zu bewegen, z.B. um einen Fertigungs-, Montage-, oder anderen Prozess zu realisieren. Diese Bewegungsvorgabe für die Transporteinheiten TEi wird in der Transporteinheitenregelung 3 in Sollwertvorgaben für die Transporteinheiten TEi umgesetzt.

An sich sollte in der Fördereinrichtungsregelung 5 sichergestellt werden, dass es auf der Förderstrecke 2 zu keinen unzulässigen Zuständen kommt. Das umfasst in erster Linie die Vermeidung einer Kollision zweier Transporteinheiten TEi auf der Förderstrecke 2. Ebenso sollte damit sichergestellt sein, dass Transporteinheiten TEi nicht unkontrolliert Barrieren überfahren, z.B. unkontrolliert in Weichen W oder in ein Fördersegment FSi, einfahren, was wiederum zu einer Kollision führen kann. Weiters kann noch die Einhaltung von Geschwindigkeitsgrenzen für die Transporteinheiten TEi sicherzustellen sein. Die Einhaltung dieser Sicherheitsvorgaben (insbesondere die Kollisionsvermeidung, aber auch die Einhaltung von Geschwindigkeitsgrenzen) ist für einen störungsfreien Betrieb der Fördereinrichtung 1 wichtig.

Im laufenden Betrieb der Fördereinrichtung 1, insbesondere bei großen Fördereinrichtungen 1 mit sehr vielen Transporteinheiten TEi und vielen Förderabschnitten FAi, könnte es aber trotzdem vorkommen, dass die obigen Sicherheitsvorgaben verletzt werden. Um in diesem Fall solche Fehler abfangen zu können, ist erfindungsgemäß vorgesehen, dass bei der Sollwertgenerierung in der Transporteinheitenregelung 3 in jedem Taktschritt $n$ überprüft wird, dass es zu keinen Kollisionen zwischen zwei Transporteinheiten TEi kommen kann. Zusätzlich kann auch noch für jede Transporteinheit TEi die Einhaltung von vorgegebenen Geschwindigkeitsgrenzen überprüft werden. Wird eine Kollisionsgefahr und/oder die Gefahr einer Geschwindigkeitsüberschreitung erkannt, dann setzt die Transporteinheitenregelung 3 eine entsprechende Handlung. Der Grundgedanke dabei ist immer, dass es zu jedem Zeitpunkt möglich sein muss, eine Transporteinheit TEi zu stoppen, ohne dass die Transporteinheit TEi mit einer anderen Transporteinheit TEi kollidiert, wobei es auch während des Stopvorgangs, also während der Verzögerung, zu keiner Kollision kommen darf. Dabei wird erfindungsgemäß davon ausgegangen, dass eine Transporteinheit TEi immer die Bewegung der in Förderrichtung der Transporteinheit TEi davor fahrenden Transporteinheiten TEk, k>i überwacht, mit denen es zu einem Kollisionsfall kommen kann, um die Einhaltung der Sicherheitsvorgaben zu überwachen. Das ist im einfachsten Fall die unmittelbar davor fahrende Transporteinheit TEi+1, wobei auch mehrere davor fahrenden Transporteinheiten TEk überwacht werden können. Insbesondere Falle von Weichen W kann es auch zu einem Kollisionsfall mit einer aus einem anderen Förderabschnitt FAi der Förderstrecke 2 kommenden Transporteinheit TEk kommen, die nicht die unmittelbar davor fahrende Transporteinheit TEi+1 sein muss. Kann zu einem Zeitpunkt für eine Transporteinheit TEi die Einhaltung der Sicherheitsvorgaben nicht mehr garantiert werden, wird von der Transporteinheitenregelung 3 eine Handlung gesetzt.

Eine Handlung kann entweder das Auslösen eines Stillstandsmanövers sein, d.h. bestimmte oder alle Transporteinheiten TEi werden gestoppt, oder das Durchführen eines Angleichsmanövers, d.h. die Bewegung einer Transporteinheit TEi wird an die Bewegung einer anderen Transporteinheit TEk, insbesondere einer unmittelbar davor fahrenden TRansporteinheit TEi+1, angepasst.

Die Funktionsweise der Überwachung der Sicherheitsvorgaben wird anhand einer Phasenraumdarstellung beschrieben, weshalb die Sicherheitsfunktion in weiterer Folge auch Phasenraumlimitierung genannt wird. Der Phasenraum ist bekanntermaßen eine Darstellung der drei Zustände einer Bewegung, nämlich Position $p$, Geschwindigkeit $v$ und Beschleunigung $a$, in einem Diagramm. Der Phasenraum kann aber auch weitere Zustände, wie beispielsweise den Ruck (zeitliche Ableitung der Beschleunigung) und/oder die Ruckänderung (zweifache zweitliche Ableitung der Beschleunigung) umfassen.

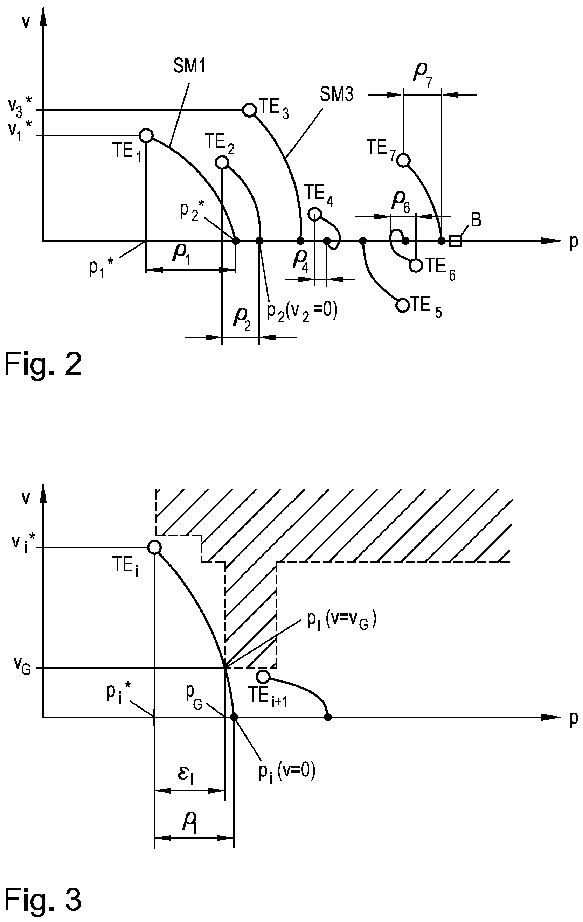

In Fig.2 ist der auf die Geschwindigkeit $v$-Position $p$-Ebene projizierte Phasenraum für sieben Transporteinheiten TEi, $i=1,...,7$, die sich auf einem Förderabschnitt FAi befinden, dargestellt. Die Transporteinheiten TEi bewegen sich zum Beispiel der Einfachheit halber jeweils mit konstanter Beschleunigung ($a_i=0$), aber unterschiedlicher Geschwindigkeit $v_i$ ungleich Null und befinden sich auf verschiedenen Positionen $p_i$. Die jeweilige momentane Position $p_i^*$ und Geschwindigkeit $v_i^*$ wird durch die Kreise markiert. In jedem Taktschritt $n$ wird nun vorausschauend berechnet, ob für eine Transporteinheit TEi ein Stillstandsmanöver durchgeführt werden kann, ohne dass diese Transporteinheit TEi mit einer davor fahrenden Transporteinheit TEk, k>i, insbesondere der unmittelbar davor fahrenden Transporteinheit TEi+1, kollidiert. Dabei kann in der Regel auch die Einhaltung eines gewissen Sicherheitsabstandes geprüft werden. Alles was hinter der Transporteinheit TEi liegt kann damit ignoriert werden, da davon ausgegangen werden kann, dass die dahinter liegenden Transporteinheiten TEi dieselbe Überprüfung durchführen. Es wird nun für eine Transporteinheit TEi in jedem Taktschritt $n$ für die berechnete neue Sollposition $p_i$ der Stillstandsweg $\rho_i$ berechnet, also der Weg, den die Transporteinheit TEi benötigt, um von der aktuellen Geschwindigkeit $v_i^*$ zum Stillstand ($v_i=0$) zu kommen. Die Position $p_i(v_i=0)$ an die die Transporteinheit TEi zum Stehen kommt, wird auch als Stillstandspunkt bezeichnet. Ein solches Stillstandsmanöver wird mit einer vorgegebenen Stillstandsbeschleunigung $a$ durchgeführt, die normalerweise der maximalen möglichen Beschleunigung $a_{max}$ entspricht, aber nicht kleiner sein sollte, als eine Beschleunigung, mit der die Transporteinheit TEi während einer normalen Bewegung verzögert werden kann. Der Stillstandspunkt $p_i(v_i=0)$ kann einfach berechnet werden und hängt natürlich davon ab, wie das Stillstandsmanöver für die Transporteinheit TEi kinematisch umgesetzt wird, was als bekannt vorausgesetzt werden kann.

An dieser Stelle ist anzumerken, dass die Verwendung der Sollwerte $S$ für die Phasenraumlimitierung vorteilhaft ist, da diese in der Transporteinheitenregelung 3 ohnehin vorhanden sind. Gleichwertig könnten aber auch aktuelle Istwerte der Bewegung der Transporteinheit TEi für die Phasenraumlimitierung verwendet werden. Istwerte müssen aber auf irgendeine Weise messtechnisch erfasst oder berechnet werden, was aufwendig ist. Zudem kann auch eine Schleppfehlerüberwachung realisiert sein, die laufend die Abweichung der Istwerte von den Sollwerten $S$ überwacht und eingreift, falls diese Abweichung zu groß wird. Auch aus diesem Grund ist die Verwendung der Sollwerte $S$ für die Phasenraumlimitierung keine Beschränkung. Die Verwendung von Sollwerten oder Istwerten wird daher als äquivalent angesehen.

In einem einfachen Fall wird ein Stillstandsmanöver beispielsweise mit einer konstanten maximalen Beschleunigung $a_{i,max}$ durchgeführt und die Transporteinheit TEi damit verzögert, bis die Geschwindigkeit $v_i=0$ erreicht ist. Aus den kinematischen Zusammenhängen kann einfach geschlossen werden, dass dann die Zeit $\Delta t_i$ bis zum Stillstand der Transporteinheit TEi aus

$$\frac{\left|v_i^*\right|}{a_{i,max}}$$ folgt, wobei $v_i^*$ die Geschwindigkeit zu Beginn der Verzögerung bezeichnet. Der Stillstandsweg $\rho_i$ der

Transporteinheit TEi folgt dann aus $\rho_i = \frac{v_i^*}{2}\Delta t$ bzw.

$$\rho_i = \frac{v_i^* \cdot \left|v_i^*\right|}{2 \cdot a_{i,max}}.$$ Je nach kinematischer Umsetzung des Stillstandsmanövers SMi kann die Berechnung des Stillstandsweg $\rho_i$ natürlich auch anders erfolgen. Beispielsweise könnte für das Stillstandsmanöver SMi ein Geschwindigkeitsprofil vorgegeben werden, mit dem eine bessere Annäherung an die Endgeschwindigkeit $v_i=0$ erzielt werden kann. Es kann auch eine Beschränkung der Beschleunigungsänderung vorgesehen sein, um keine (zu) ruckartigen Bewegungen der Transporteinheit TEi zu erzeugen.

Damit kann als Kriterium für das Ausführen eines Stillstandsmanövers SMi für eine Transporteinheit TEi in einem Taktschritt n die Ungleichung

$$p_i^* + \rho_i\left[+M\right] \leq p_k^* + \rho_k$$

geprüft werden, um eine Kollision mit einer davor fahrenden Transporteinheit TEk zu vermeiden. Dabei kann natürlich auch noch ein einzuhaltender Mindestabstand M vorgesehen sein. Im Mindestabstand M kann eine Sicherheitsreserve enthalten sein, es können darin aber auch die Abmessungen der Transporteinheit TEi abgebildet werden. Ebenso könnten im Mindestabstand M auch die Schleppfehler (also die Abweichung zwischen Sollposition und Istposition der Transporteinheit TEi) berücksichtigt werden.

Allgemein gesprochen wird überprüft, ob sich die eine Transporteinheit TEi und eine davor fahrende Transporteinheit TEk während angenommener Stillstandsmanöver SMi, SMk zu nahe kommen, was z.B. über die Stillstandspunkte $p_i(v_i=0)$, $p_k(v_k=0)$ oder die Stillstandswege $\rho_i$, $\rho_k$ überprüft werden kann. Wie nach sich die Transporteinheiten TEi, TEk kommen dürfen kann beispielsweise über den Mindestabstand M definiert werden. Ist das der Fall, wird ein Stillstandsmanöver SMi ausgelöst.

Je nach kinematischer Umsetzung für die Durchführung eines Stillstandsmanövers SMi kann es auch passieren, dass die Transporteinheit TEi beim erstmaligen Erreichen der Geschwindigkeit $v_i=0$ nicht gestoppt werden kann. Ein Beispiel hierfür ist die Implementierung eines Ruckfilters (Beschränkung der zulässigen Beschleunigungsänderung) in Form eines Mittelwertfilters. Das kann dazu führen, dass eine Transporteinheit TEi zwar die Geschwindigkeit $v_i=0$ erreicht, aber die Bewegung an diesem Punkt nicht abgebrochen werden kann, sondern mit umgekehrter Geschwindigkeit fortgesetzt werden muss. Daher wird die Transporteinheit TEi in diesem Fall zwangsweise über diesen Umkehrpunkt $p_i'(v_i=0)$ bei erstmaligem Erreichen der Geschwindigkeit $v_i=0$ hinausbewegt werden und mit umgekehrter Geschwindigkeit in die entgegengesetzte Richtung weiterbewegt werden. Die Implementierung der kinematischen Bewegung des Stillstandsmanövers sorgt dann dafür, dass die Transporteinheit TEi mit umgekehrter Geschwindigkeit zum Stillstand gebracht wird. Der Endpunkt $p_i''(v_i=0)$ wird dann beim nochmaligen Erreichen der Geschwindigkeit $v_i=0$ erreicht. Unter der Annahme, dass die Phasenraumlimitierung wieder sicherstellt, dass die hintere Transporteinheit TEi nicht mit einer davor fahrenden Transporteinheit TEk kollidiert, ergibt sich der Stillstandsweg $p_i$ in diesem Fall aus der minimalen Distanz zwischen der Startposition $pi^*$ des Stillstandsmanövers und dem Umkehrpunkt $p_i'(v_i=0)$ und Endpunkt $p_i''(v_i=0)$, also $\rho_i = Min\{p_i'(v_i=0)-p_i^*, \; p_i''(v_i=0)-p_i^*\}$. In gleicher Weise ergibt sich in diesem Fall der Stillstandspunkt $p_i(v_i=0)$ der Transporteinheit TEi als Minimum aus Umkehrpunkt $p_i'(v_i=0)$ und Endpunkt $p_i''(v_i=0)$. Das ist in Fig.2 mit den Transporteinheiten TE4, TE6 dargestellt. Ansonsten ergibt sich in diesem Fall kein Unterschied zu oben.

Ebenso ist es unerheblich in welche Richtung sich eine davor fahrende Transporteinheit TEk bewegt, wie in Fig.2 anhand der Transporteinheit TE5 und TE6 angedeutet wird. Das bedeutet aber auch, dass die Phasenraumlimitierung vorteilhafterweise auch Transporteinheiten TEk berücksichtigt, die sich in die entgegengesetzte Richtung bewegen. Die Geschwindigkeit $v_i$ muss nur vorzeichenrichtig berücksichtigt werden, was einfach möglich ist.

In Fig.2 ist weiters noch eine Barriere B dargestellt. Das ist beispielsweise der Einfahrtsbereich einer Weiche W, die nur dann überfahren werden darf, wenn die Weiche W für eine Transporteinheit TEi freigegeben ist, z.B. durch eine übergeordnete Fördereinrichtungsregelung 5. Der Stillstandsweg $\rho_B$ einer Barriere B kann als Null angesehen werden und die aktuelle Position $p_B^*$ der Barriere entspricht damit einem Stillstandspunkt $p_B(v=0)$, wobei die Position $p_B^*$ der Barriere natürlich eine vorgegebene Position ist. Damit kann beispielsweise wieder die obige Ungleichung für die Überprüfung verwendet werden, also $p_i^* + \rho_i\,[+M] \leq p_B^*$, um eine Kollision mit der Barriere zu vermeiden, wobei wiederum ein Mindestabstand M berücksichtigt werden kann.

Es wird also für die Kollisionsüberwachung der Phasenraumlimitierung von einem Extremfall ausgegangen in dem angenommen wird, dass eine Transporteinheit TEk, k>i ein Stillstandsmanöver SMk gemäß einer vorgegebenen kinematischen Bewegung, z.B. mit maximal möglicher Beschleunigung $a_{max}$, ausführt oder dass es auf der Förderstrecke 2 eine Barriere B gibt, die nicht überfahren werden darf. Dabei muss sichergestellt werden, dass eine auf der Förderstrecke 2 in Förderrichtung dahinter bewegte Transporteinheit TEi mit einem vorgegebenen Stillstandsmanöver SMi gestoppt werden kann, ohne dass es zu einer Kollision mit der davor fahrenden Transporteinheit TEk oder der Barriere B kommt. Damit wird sichergestellt, dass die Transporteinheiten TEi der Fördereinrichtung 1 jederzeit gestoppt werden können, ohne dass es zu einer Kollision kommt, bzw. dass sich die beiden Transporteinheiten TEi, TEk oder die Transporteinheit TEl und die Barriere B nicht zu nahe kommen.

Falls sich im laufenden Betrieb die voraus berechneten Stillstandspunkte $p_i(v_i=0)$ und $p_k(v_k=0)$ zweier Transporteinheiten TEi, TEk, gegebenenfalls unter Berücksichtigung eines Umkehrpunktes p' und Endpunktes p" wie oben beschrieben, bzw. der vorausberechnete Stillstandspunkt $p_i(v_i=0)$ einer Transporteinheit TEi und der Stillstandspunkt $p_B(v=0)$ einer Barriere B zu nahe kommen, gegebenenfalls mit Berücksichtigung eines Mindestabstandes M, dann wird für die Transporteinheit TEi ein Stillstandsmanöver SMi ausgeführt. Die Überprüfung der Bedingung "zu nahe kommen" kann dabei auf geeignete Weise erfolgen, beispielsweise mit den obigen Ungleichungen. Von einem solchen Stillstandsmanöver SMi müssen die anderen Transporteinheiten TEi der Fördereinrichtung 1 noch nicht unmittelbar betroffen sein, d.h. diese können vorerst die Bewegung normal fortsetzen. Ein solches Stillstandsmanöver SMi kann aber dahinter fahrende Transporteinheiten TEi ebenfalls dazu zwingen ein Stillstandsmanöver SMi auszuführen. Das Auslösen eines Stillstandsmanövers SMi kann auch als Fehlerfall angesehen werden, der den Stillstand eines Förderabschnitts FAi oder der gesamten Fördereinrichtung 1 bewirkt.

Zur Überwachung einer Geschwindigkeitsbegrenzung wird ebenfalls von einem Stillstandsmanöver SMi einer Transporteinheit TEi ausgegangen und es wird in jeden Taktschritt vorausschauend überprüft, ob die Geschwindigkeit $v_i$ einer Transporteinheit TEi mit einem Stillstandsmanöver SMi sicher von einer aktuellen Istgeschwindigkeit $v_i^*$ auf die durch die Geschwindigkeitsbegrenzung (angedeutet durch den schraffierten Bereich im Phasenraum der Fig.3) vorgegebene Grenzgeschwindigkeit $v_G$, beispielsweise in einem Bereich des Förderabschnitts FAi auf dem die Transporteinheit TEi aktuell bewegt wird, abgesenkt werden kann, wie in Fig.3 dargestellt. Der Teil des Stillstandsmanövers SMi bis zum Erreichen der Grenzgeschwindigkeit $v_G$ wird dabei als Bremsweg $\varepsilon_i$ bezeichnet. Der Bremsweg $\varepsilon_i$ kann dabei

wieder aus der bekannten konkreten kinematischen Umsetzung des Stillstandsmanövers SMi berechnet werden. Wenn als Beispiel wieder von einer Verzögerung der Transporteinheit TEi mit einer konstanten maximalen Beschleunigung $a_{i,max}$ ausgegangen wird, dann ergibt

sich der Bremsweg $\varepsilon_i = \dfrac{v_i^* - v_G}{2}\Delta t$ bzw.

$$\varepsilon_i = \frac{\left(v_i^* - v_G\right)\cdot\left|v_i^* - v_G\right|}{2\cdot a_{i,max}}.$$ Damit kann für die Transporteinheit TEi in jedem Taktschritt n für eine gegebene Geschwindigkeitsbegrenzung geprüft werden, ob die Ungleichung

$$p_i(0) + \varepsilon_i\left[+M\right] \le p_G,$$

hält, wobei $p_G$ die vorgegebene Position der Geschwindigkeitsbegrenzung am Förderabschnitte FAi angibt und $p_i^*$ die aktuelle Position der Transporteinheit TEi. Dabei kann, wie oben beschrieben, wiederum ein bestimmter Mindestabstand M vorgegeben werden. Kann die obige Bedingung für eine Transporteinheit TEi nicht eingehalten werden, wird für die Transporteinheit TEi ein Stillstandsmanöver SMi zum Stoppen der Transporteinheit TEi ausgelöst, was wiederum einen Fehlerfall im Betrieb der Fördereinrichtung 1 darstellen kann. Wie oben bereits ausgeführt, kann das auch bei den dahinter fahrenden Transporteinheiten TEi ein Stillstandsmanöver SMi auslösen, sobald die Phasenraumlimitierung für diese Transporteinheiten TEi anspricht.

Alternativ könnte auch eine Geschwindigkeitsposition $p_i(v_i=v_G)$ berechnet werden und überprüft werden, ob sich die Geschwindigkeitsposition $p_i(v_i=v_G)$ und die vorgegebene Position $p_G$ der Geschwindigkeitsbegrenzung zu nahe kommen, was wiederum über den Mindestabstand definiert sein kann.

Eine lokale Geschwindigkeitsbegrenzung muss aber nicht statisch definiert sein, sondern es kann auch vorgesehen sein, dass die lokale Geschwindigkeitsbegrenzung dynamisch ein- und ausgeschaltet wird, beispielsweise über die Fördereinrichtungsregelung 5 oder in einem festgelegten zeitlichen Muster. Um mit solchen dynamischen Geschwindigkeitsbegrenzungen umzugehen, kann diese vorerst statisch angesehen werden und von der Phasenraumlimitierung überwacht werden. Wenn allerdings klar ist oder bekannt ist, dass für eine Transporteinheit TEi die Geschwindigkeitsbegrenzung bis zum Verlassen des Bereichs der Geschwindigkeitsbegrenzung nicht mehr aufrecht sein wird, dann kann die Geschwindigkeitsbegrenzung für die Transporteinheit TEi ignoriert werden.

Ebenso ist es denkbar, dass eine Geschwindigkeitsbegrenzung nur für eine, oder auch mehrere, bestimmte Transporteinheit TEi definiert wird. Damit wäre es beispielsweise auch möglich, eine Geschwindigkeitsbegrenzung vom Zustand, beispielsweise von der Beladung, der Transporteinheit TEi abhängig zu machen. Mit einer hohen Beladung kann beispielsweise in einer Kurve eine Geschwindigkeitsbegrenzung gelten, wohingegen eine leere Transporteinheit TEi dieser Geschwindigkeitsbegrenzung nicht unterliegen muss.

Es kann aber für bestimmte Transporteinheiten TEi vorgesehen sein, die Bewegung der Transporteinheit TEi anzupassen, ohne im Konfliktfall sofort ein komplettes Stillstandsmanöver SMi, also bis $v_i=0$, ausführen zu müssen. Für eine Transporteinheit TEi kann beispielsweise nur eine Zielposition festgelegt sein, wobei der Weg bis zur Zielposition von der Transporteinheitenregelung 3 flexibel vorgegeben werden kann, z.B. in Form eines bestimmten Geschwindigkeitsprofils unter Einhaltung von Maximalwerten für die Geschwindigkeit und Beschleunigung, gegebenenfalls auch für den Ruck oder die Ruckänderung. Damit kann die Transporteinheitenregelung 3, in dem normalerweise auch die Phasenraumlimitierung implementiert sein wird, die Bewegung der Transporteinheit TEi unter Beibehaltung der Zielposition ändern, um ein vollständiges Stillstandsmanöver SMi zu vermeiden. Die Phasenraumlimitierung kann dabei eine Angleichsbewegung ausführen, sodass die Sicherheitsvorgaben eingehalten werden. Dieser Fall kann beispielsweise auftreten, wenn die unmittelbar vorausfahrende Transporteinheit TEi+1 in die gleiche Richtung aber mit einer kleineren Geschwindigkeit $v_{i+1}$ unterwegs ist, als die Transporteinheit TEi mit Geschwindigkeit $v_i$. Das würde unweigerlich dazu führen, dass die Phasenraumlimitierung irgendwann anspricht, weil sich die beiden Transporteinheiten TEi, TEi+1 irgendwann zu nahe kommen. In diesem Fall würde die Transporteinheit TEi mit einem Stillstandsmanöver SMi gestoppt werden, obwohl eine einfache Geschwindigkeitsanpassung der Transporteinheit TEi ausreichen würde.

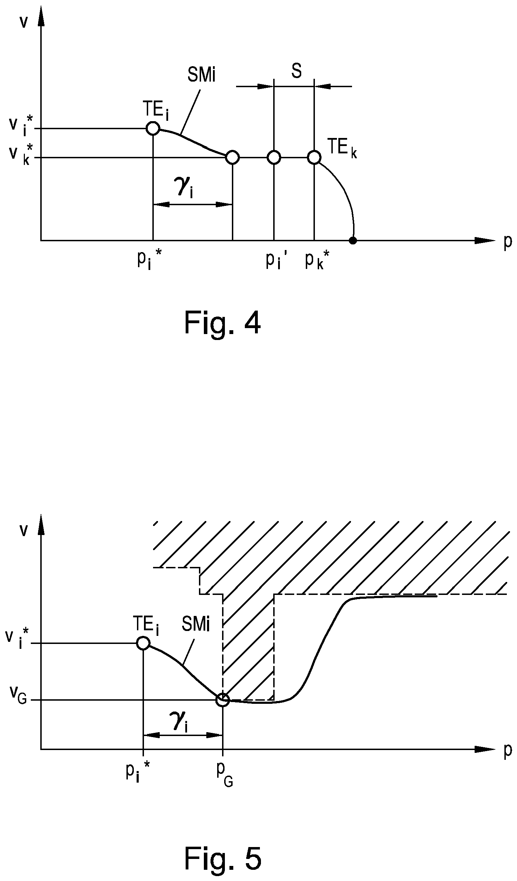

Die Angleichsbewegung wird unter Bezugnahme auf die Fig.4 beschrieben. Hier bewegt sich die Transporteinheit TEi mit einer Geschwindigkeit $v_i$, die größer ist, als die Geschwindigkeit $v_k$ einer davor fahrenden Transporteinheit TEk. Es wird wieder von einem Stillstandsmanöver SMi ausgegangen, das vorausblickend berechnet wird, wobei das Stillstandsmanöver SMi die Transporteinheit TEi in diesem Fall nicht stoppt, also auf die Endgeschwindigkeit $v_i=0$ verzögert, sondern auf die Geschwindigkeit $v_k$ einer davor fahrenden Transporteinheit TEk ausgerichtet ist. Das Stillstandsmanöver SMi erfolgt wiederum nach einer vorgegebenen kinematischen Bewegung. Beispielsweise erfolgt das Stillstandsmanöver SMi in einem einfachen Fall wieder mit einer konstanten maximalen Beschleunigung $a_{i,max}$ Für die Angleichsbewegung wird man vorzugsweise eine kinematische Bewegung implementieren, die eine möglichst ruckfreie Angleichsbewegung sicherstellt, wie in Fig.4 angedeutet.

Zuerst wird (analog zur Berechnung des Bremsweges $\varepsilon_i$) gemäß der konkreten kinematischen Umsetzung des Stillstandsmanövers SMi der Angleichsweg $\gamma_i$ berechnet, der benötigt wird, um die Transporteinheit TEi gemäß der kinematischen Umsetzung der Angleichsbewegung von der Geschwindigkeit $v_i$ auf die Geschwindigkeit $v_k$ einer vorausfahrenden Transporteinheit TEk abzubremsen. In gleicher Weise könnte auch wieder eine Geschwindigkeitsposition $p_i(v_i=v_k)$ berechnet erden und für die Überprüfung herangezogen werden.

Nun werden von der Phasenraumlimitierung vorzugsweise zwei Bedingungen erfüllt. Zum einen sollen sich die beiden Transporteinheiten TEi, TEk bei einer Angleichsbewegung nicht so nahe kommen, dass durch die Phasenraumlimitierung ein Stillstandsmanöver SMi wie bezogen auf die Fig.1 beschrieben ausgelöst wird. Das ist in Fig.4 durch die Position $p_i'$ und die Startposition $p_k^*$ der Transporteinheit TEk zum Zeitpunkt wenn die Transporteinheit TEi die Geschwindigkeit $v_k$ erreicht angedeutet. Daher wird ein Sicherheitsabstand S vorgegeben, der nach dem Ausführen der Angleichsbewegung zwischen den beiden Transporteinheiten TEi, TEk mindestens einzuhalten ist, sodass die Transporteinheit TEi nicht gestoppt wird. Gleichfalls soll der Sicherheitsabstand S so groß sein, dass im Falle einer Verzögerung der vorausfahrenden Transporteinheit TEk mit einer Beschleunigung, die größer ist als die Beschleunigung zum Verzögern der Transporteinheit TEi (d.h. die beiden Transporteinheiten TEi, TEk kommen sich beim Verzögern näher) das Auslösen einer Stillstandsbewegung SMi zum Stoppen der Transporteinheit TEi verhindert wird. Der Sicherheitsabstand S kann dabei aus der Kenntnis der kinematischen Umsetzungen der Bewegungen der Transporteinheiten TEi, TEk ermittelt werden.

Somit kann eine Angleichsbewegung beispielsweise ausgelöst werden, wenn die Bedingung

$$\left(p_k^* - p_i^*\right) - \gamma_i\left[+M\right] \leq S$$

verletzt ist. Damit kann sichergestellt werden, dass eine Angleichsbewegung ausgeführt werden kann, ohne dass die Phasenraumlimitierung ein Stillstandsmanöver SMi zum Stoppen der Transporteinheit TEi auslöst. Die Angleichsbewegung kann in der Transporteinheitenregelung 3 in einer vorteilhaften Ausgestaltung beispielsweise einfach dadurch umgesetzt werden, dass für die Transporteinheit TEi eine neue maximale Geschwindigkeit $v_i=v_k$ vorgegeben wird.

Wenn die Angleichsbewegung kinematisch anders umgesetzt ist, als ein Stillstandsmanöver zum Stoppen der Transporteinheit TEi, z.B. weil ein sanftes Annähern an die Zielgeschwindigkeit $v_k$ angestrebt wird, kann ein weiteres Verbesserungspotential genutzt werden. Es wird angenommen, dass die vorausfahrende Transporteinheit TEk während der Angleichsbewegung ein Stillstandsmanöver SMk ausführt. In diesem Fall würde für die Transporteinheit TEi zuerst die sanfte Angleichsbewegung durchgeführt, bis die Phasenraumlimitierung eingreift und die Transporteinheit TEi mit einem Stillstandsmanöver SMi stoppt. Hätte die Transporteinheit TEi gleich ein Stillstandsmanöver SMi ausgeführt, wäre diese früher zum Stillstand gekommen, womit anstelle der Angleichsbewegung zu einem späteren Zeitpunkt gleich ein Stillstandsmanöver SMi ausgeführt werden könnte. Damit würde die Fördereinrichtung 1 unter Umständen später in einen ungewollten Fehlerzustand übergehen, was ausreichen kann, dass sich potentielle Konfliktsituation entlang der Förderstrecke 2 von selbst wieder beheben, bevor die Phasenraumlimitierung eingreift.

Damit kann auch eine lokal definierte Geschwindigkeitsbegrenzung mit einer Angleichsbewegung behandelt werden, wie anhand von Fig.5 beschrieben wird. Ist an der Förderstrecke 2 eine Geschwindigkeitsbegrenzung auf die Geschwindigkeit $v_G$ vorgesehen, dann wird eine Angleichsbewegung mit dem Angleichsweg $\gamma_i$ zum Beispiel ausgeführt, wenn die Bedingung

$$\left(p_G{}^* - p_i{}^*\right) - \gamma_i\left[+M\right] \le S$$

verletzt wird. Dabei kann wiederum ein Mindestabstand M und/oder ein Sicherheitsabstand S berücksichtigt werden. Nach der Geschwindigkeitsbegrenzung kann die Geschwindigkeit der Transporteinheit TEi bedarfsweise wieder erhöht werden, beispielsweise durch die Vorgabe in der Transporteinheitenregelung 3, wie in Fig.5 angedeutet.

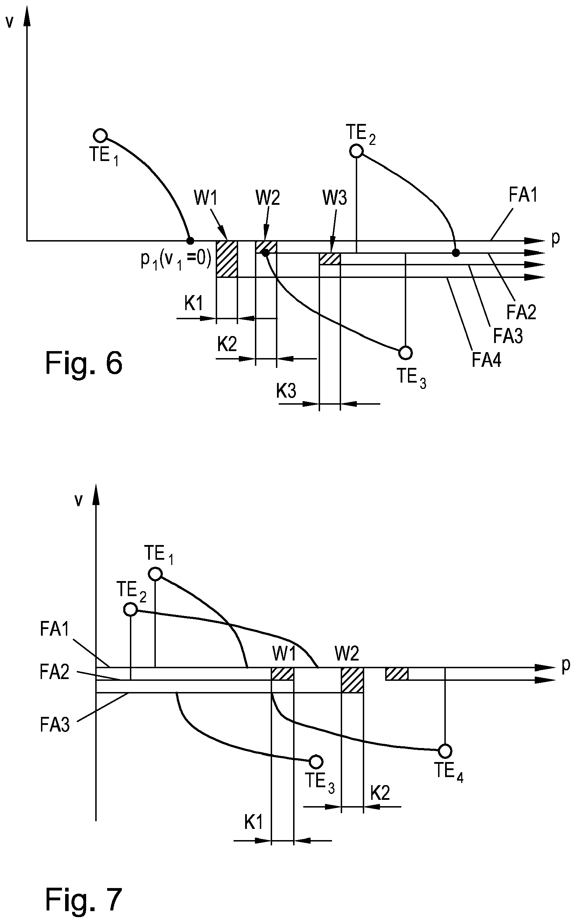

Mit den obigen Konzepten können auch Weichen W behandelt werden, wie anhand der Fig. 6 und 7 beschrieben wird. Einer Weiche W ist eine Konfliktzone K zugeordnet, innerhalb der sich nur ein Stillstandspunkt $p_i(v_i{=}0)$ einer einzigen Transporteinheit TEi befinden darf, da es ansonsten im Falle von Stillstandsmanövern SMi zu einer Kollision zwischen Transporteinheiten TEi im Weichenbereich kommen kann. Zur Weichenbehandlung werden wiederum die Stillstandsmanöver SMi der Transporteinheiten TEi vorausschauend berechnet und ausgewertet.

Die Fig.6 zeigt aus Sicht der Förderrichtung der Transporteinheit TE1 auseinanderführende Weichen W1, W2, W3 mit den zugehörigen Konfliktzonen K1, K2, K3, an denen die Transporteinheit TEi jeweils zwischen mehreren Förderabschnitten FA1, FA2, FA3, FA4 der Förderstrecke 2 wählen kann. Eine Transporteinheit TE2 mit gleicher Förderrichtung wie die Transporteinheit TE1, aber auf einem Förderabschnitt FA2, auf dem die Transporteinheit TE1 nicht bewegt werden soll, kann ignoriert werden, weil es zu keiner Kollision kommen kann. Eine Transporteinheit TE3 mit entgegengesetzter Bewegungsrichtung wird aber so behandelt, als ob sich diese auf demselben Förderabschnitt FA1 wie die Transporteinheit TE1 befinden würde. Dabei muss zusätzlich gelten, dass im Falle von Stillstandsmanövern SMi nur eine der beiden Transporteinheiten TE1, TE3 in die Konfliktzone K2 der Weiche W2, die beiden Förderabschnitten FA1, FA2 zugeordnet ist, einfahren darf. Ansonsten sorgt die oben beschriebene Phasenraumlimitierung dafür, dass die beiden Transporteinheiten TE1, TE3 auf dem Förderabschnitt FA1 nicht kollidieren.

Die Fig.7 zeigt aus Sicht der Förderrichtung der Transporteinheit TE1 zusammenführende Weichen W1, W2 mit den zugehörigen Konfliktzonen K1, K2, wo Transporteinheiten TEi aus mehreren Förderabschnitten FA1, FA2, FA3 auf einen Förderabschnitt zusammengeführt werden. Eine Transporteinheit TE3 auf einem anderen Förderabschnitt FA3 als die Transporteinheit TE1 und mit einer zur Transporteinheit TE1 entgegengesetzten Förderrichtung kann ignoriert werden, da es zu einer Kollision kommen kann. Eine Transporteinheit TE4, die sich auf demselben Förderabschnitt FA1 bewegt wie die Transporteinheit TE1, allerdings mit entgegengesetzter Förderrichtung muss berücksichtigt werden. Soll sich z.B. die Transporteinheit TE4 an der Weiche W1 auf demselben Förderabschnitt FA1 weiterbewegen, auf dem auch die Transporteinheit TE1 unterwegs ist, dann greift die oben beschriebene Phasenraumlimitierung. Soll sich die Transporteinheit TE4 an der Weiche W1 auf einem anderen Förderabschnitt FA2 weiterbewegen, dann darf nur eine der beiden Transporteinheiten TE1, TE4 im Falle eines Stillstandsmanövers SM1, SM4 in die Konfliktzone K1 der Weiche W1, die beiden Förderabschnitten FA1, FA2 zugeordnet ist, einfahren. Eine Transporteinheit TE2 die sich in dieselbe Bewegungsrichtung wie die Transporteinheit TE1, aber auf einem anderen Förderabschnitt FA2, bewegt, muss ebenfalls berücksichtigt werden, wenn die beiden Förderabschnitte FA1, FA2 an einer Weiche W1 zusammengeführt werden. In diesem Fall darf nur eine der beiden Transporteinheiten TE1, TE2 im Falle eines Stillstandsmanövers SM1, SM2 in die Konfliktzone K1 der Weiche W1, die beiden Förderabschnitten FA1, FA2 zugeordnet ist, einfahren.

Die Behandlung von Weichen W1, W2, W3, wie oben beschrieben, kann beispielsweise durch das Setzen von Barrieren B für bestimmte Transporteinheiten TEi behandelt werden. Kann es zwischen zwei Transporteinheit TEi im Weichenbereich bzw. in einer Konfliktzone K einer Weiche W im Falle von Stillstandsmanövern SMi zu Kollisionen kommen, dann kann für eine der beteiligten Transporteinheiten TEi eine Barriere B gesetzt werden, womit die normale Phasenraumlimitierung dafür sorgt, dass diese Transporteinheit TEi die Barriere B nicht überfährt. Die Barriere B kann wieder entfernt werden, wenn das Kollisionsrisiko nicht mehr besteht. Damit bedarf es für Weichen keine anderen Mechanismen der Phasenraumlimitierung, als oben bereits beschrieben. Es muss lediglich eine Programmlogik implementiert werden, die das Setzen und Aufheben der temporären Barrieren B gemäß den obigen Bedingungen durchführt.

Die Phasenraumlimitierung kann natürlich auch die Förderstrecke 2 betreffendes Wissen nutzen. Es kann beispielsweise Förderabschnitte FAi geben, wo keine Stillstandsmanöver SMi auftreten können. Ein Beispiel hierfür ist ein Förderabschnitt FAi in dem eine mechanische Kopplung mit einem Roboter wirkt, weil der Roboter Arbeiten an einem Werkstück auf einer Transporteinheit TEi durchführt. In diesem Fall könnte beispielsweise eine Angleichsbewegung hinausgezögert werden, weil nicht damit gerechnet werden muss, dass eine vorausfahrende Transporteinheit TEk in einem solchen Förderabschnitt FAi ein Stillstandsmanöver SMk ausführt.

Ebenso könnte die Phasenraumlimitierung Kenntnisse einer übergeordneten Fördereinrichtungsregelung 5, mit Routenberechnung, Weichenarbitrierung, Deadlockvermeidung, Steuerung temporärer Barrieren, usw., nutzen. Angenommen die Phasenraumlimitierung veranlasst für eine Transporteinheit TEi ein Stillstandsmanöver SMi (auch als Angleichsbewegung) aufgrund einer gesetzten temporären Barriere B, weiß aber, dass diese Barriere B in hinreichend naher Zukunft gewiss öffnet. Dann könnte die Phasenraumlimitierung dieses Stillstandsmanöver SMi auch vermeiden. Ein Beispiel hierfür könnte die Steuerung des Zutritts einer Transporteinheit TEi zu einem Fördersegment FSi mittels temporärer Barrieren B sein. Der Zutritt einer Transporteinheit TEi wird vorauschauend geregelt, beispielsweise in der Fördereinrichtungsregelung 5. Die Phasenraumlimitierung verhindert das Überfahren der Barriere B. Die gesetzte Barriere B könnte nun an die Phasenraumlimitierung auch die Information weitergeben, ab wann die Barriere sicher wieder entfernt ist, z.B. weil eine vorausfahrende Transporteinheit TEk das Fördersegment FSi sicher verlassen haben wird. Damit kann die Phasenraumlimitierung für eine Transporteinheit TEi ein Stillstandsmaöver SMi trotz gesetzter Barriere B unter Umständen erst später auslösen, weil klar ist, dass eine vorausfahrende Transporteinheit TEk das Fördersegment FSi verlassen haben wird, bevor die Transporteinheit TEi mit dem Stillstandsmanöver in das Fördersegment FSi einfährt (und damit keine Barriere B mehr gesetzt wäre).

In ähnlicher Weise könnten Annahmen über die geplante bzw. durchgeführte Bewegung anderer Transporteinheiten TEi helfen, verschiedene Eingriffe der Phasenraumlimitierung zu verbessern. Wenn etwa gewiss ist, dass die Transporteinheit TEk in Fig.4 hinreichend beschleunigen wird, dann könnte das von der Phasenraumlimitierung zum Anlass genommen werden, das Angleichsmanöver überhaupt nicht einzuleiten.

In einer vereinfachten Ausführung könnte auch vorgesehen sein, für eine Transporteinheit TEi die Einhaltung der Sicherheitsvorgaben über die Stillstandsmanöver SMi nicht in jedem Taktschritt zu überprüfen, sondern in längeren Abständen, beispielsweise nur jeden x-ten Taktschritt x·n.

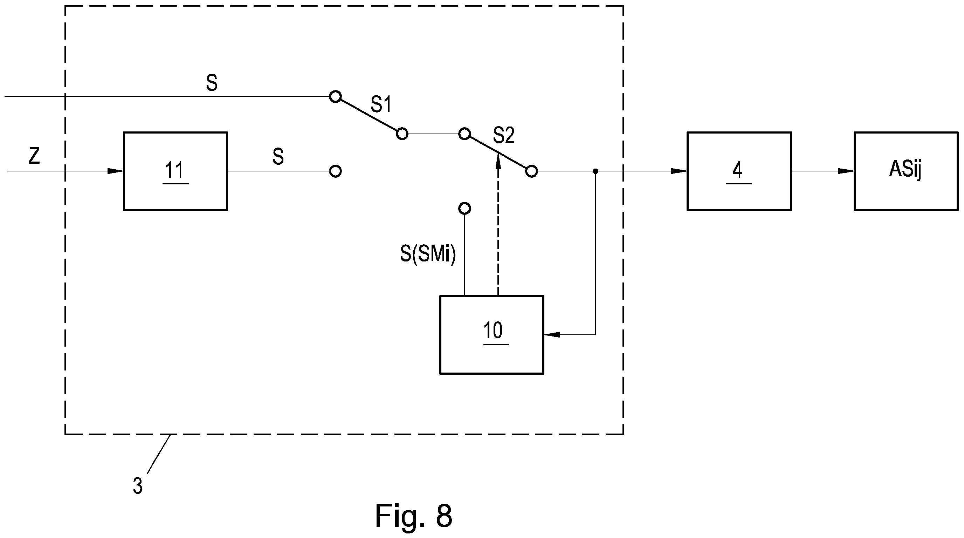

Die Umsetzung der Überwachung der Sicherheitsvorgaben kann beispielsweise wie in Fig.8 schematisch dargestellt erfolgen. Hierbei wird angenommen, dass die Phasenraumlimitierung 10 in einer Transporteinheitenregelung 3 implementiert ist. Die Transporteinheitenregelung 3 erhält entweder direkt Sollwerte S zur Bewegung einer Transporteinheit TEi, beispielsweise von einer übergeordneten Fördereinrichtungsregelung 5, oder erhält eine Zielvorgabe Z für die Bewegung, beispielsweise in Form einer Zielgeschwindigkeit oder einer Zielposition. Wenn eine Zielvorgabe Z vorgegeben wird, dann kann in der Transporteinheitenregelung 3 auch eine Bewegungsprofileinheit 11 vorgesehen sein, die die Zielvorgabe Z in Sollwerte S der Bewegung, beispielsweise in Form eines Geschwindigkeitsprofil, umsetzt. Diese alternativen Möglichkeiten sind in Fig.8 durch den Schalter S1 angedeutet. Der Sollwert S wird zum Ansteuern der Antriebsspulen ASij, z.B. über eine Segmentregelungseinheit 4, verwendet.

Der Sollwert S wird aber auch in einer Phasenraumlimitierung 10 verwendet, um die Einhaltung der Sicherheitsvorgaben für eine Transporteinheit TEi wie oben beschrieben zu überwachen. Hierzu wird angenommen, dass die Phasenraumlimitierung 10 alle dafür notwendigen Information, wie beispielsweise Kenntnis der Bewegung voraus fahrender Transporteinheiten TEk, lokale Geschwindigkeitsgrenzen, Barrieren, usw., vorliegen hat. Spricht die Phasenraumlimitierung 10 aufgrund des Sollwertes S an, greift die Phasenraumlimitierung 10 ein und leitet für die Transporteinheit TEi ein Stillstandsmanöver SMi. Dazu gibt die Phasenraumlimitierung 10 die Sollwerte S(SMi) für das Stillstandsmanöver SMi vor. Das ist mit dem Schalter S2 in Fig.8 angedeutet. Das Stillstandsmanöver SMi kann wie beschrieben zum Stoppen der Transporteinheit TEi führen, oder kann auch als Angleichsbewegung umgesetzt werden.

## Patentansprüche

1.  Verfahren zum Betreiben einer Fördereinrichtung (1) in Form eines Langstatorlinearmotors bei der eine Mehrzahl von Transporteinheiten (TEi) entlang einer Förderstrecke (2) bewegt werden, wobei die Bewegung der Transporteinheiten (TEi) entlang der Förderstrecke (2) durch eine Vorgabe von Sollwerten (S) der Bewegung durch zumindest eine Transporteinheitenregelung (3) geregelt wird, **dadurch gekennzeichnet, dass** für zumindest eine erste Transporteinheit (TEi) vorausschauend ermittelt wird, ob für die Transporteinheit (TEi) ein Stillstandsmanöver (SMi) mit vorgegebener Kinematik durchgeführt werden kann, sodass

    a) eine Kollision dieser Transporteinheit (TEi) mit einer davor fahrenden zweiten Transporteinheit (TEk) oder mit einer Barriere (B) der Förderstrecke (2) verhindert wird, oder

    b) das Überschreiten einer vorgegebenen lokalen Geschwindigkeitsbeschränkung ($v_G$) an einer Stelle ($p_G$) der Förderstrecke (2) durch die erste Transporteinheit (TEi) verhindert wird, oder

c) eine Angleichsbewegung der ersten Transporteinheit (TEi) auf eine Geschwindigkeit ($v_k^*$) einer davor fahrenden zweiten Transporteinheit (TEk) möglich ist,

**und dass** das Stillstandsmanöver (SMi) der ersten Transporteinheit (TEi) tatsächlich eingeleitet wird, wenn zumindest eine dieser Bedingungen verletzt wird.

2. Verfahren nach Anspruch 1, **dadurch gekennzeichnet, dass** für die davor fahrende zweite Transporteinheit (TEk) ein Stillstandsmanöver (SMk) angenommen wird und geprüft wird, ob die erste Transporteinheit (TEi) bei einem angenommenen Stillstandsmanöver (SMi) der zweiten Transporteinheit (TEk) zu nahe kommt.

3. Verfahren nach Anspruch 2, **dadurch gekennzeichnet, dass** für die erste Transporteinheit (TEi) und für die zweite Transporteinheit (TEk) aus der Kenntnis der kinematischen Umsetzung des jeweiligen Stillstandsmanövers (SMi, SMk) jeweils ein Stillstandspunkt ($p_i(v_i=0)$, $p_k(v_k=0)$) oder ein Stillstandsweg ($\rho_i$, $\rho_k$) berechnet wird und diese verglichen werden, um festzustellen, ob sich die erste Transporteinheit (TEi) und die zweite Transporteinheit (TEk) zu nahe kommen.

4. Verfahren nach Anspruch 1, **dadurch gekennzeichnet, dass** überprüft wird, ob die erste Transporteinheit (TEi) bei einem angenommenen Stillstandsmanöver (SMi) der Barriere (B) zu nahe kommt.

5. Verfahren nach einem der Ansprüche 2 bis 4, **dadurch gekennzeichnet, dass** ein Mindestabstand (M) vorgegeben wird, der angibt, wie nahe die Transporteinheit (TEi) der davor fahrenden Transporteinheit (TEk) oder der Barriere (B) kommen darf.

6. Verfahren nach Anspruch 1, **dadurch gekennzeichnet, dass** überprüft wird, ob die Geschwindigkeit ($v_i$) der ersten Transporteinheit (TEi) bei einem angenommenen Stillstandsmanöver (SMi) von einer aktuellen Istgeschwindigkeit ($v_i^*$) auf eine durch die Geschwindigkeitsbegrenzung vorgegebene Grenzgeschwindigkeit ($v_G$) abgesenkt werden kann, ohne dass die erste Transporteinheit (TEi) dem definierten Bereich der Geschwindigkeitsbegrenzung zu nahe kommt.

7. Verfahren nach Anspruch 6, **dadurch gekennzeichnet, dass** für die erste Transporteinheit (TEi) aus der Kenntnis der kinematischen Umsetzung des Stillstandsmanövers (SMi) ein Geschwindigkeitspunkt ($p_i(v_i=v_G)$) oder ein Bremsweg ($\varepsilon_i$) berechnet

wird und damit ermittelt wird, ob die Geschwindigkeit ($v_i$) der Transporteinheit (TEi) vor dem Bereich der Geschwindigkeitsbegrenzung auf die Grenzgeschwindigkeit ($v_G$) abgesenkt werden kann.

8. Verfahren nach Anspruch 6 oder 7, **dadurch gekennzeichnet, dass** ein Mindestabstand (M) vorgegeben wird, der angibt, wie nahe die Transporteinheit (TEi) dem Bereich der Geschwindigkeitsbegrenzung kommen darf.

9. Verfahren nach Anspruch 1, **dadurch gekennzeichnet, dass** überprüft wird, ob die Geschwindigkeit ($v_i$) der ersten Transporteinheit (TEi) bei einem angenommenen Stillstandsmanöver (SMi) von einer aktuellen Istgeschwindigkeit ($v_i^*$) auf eine Geschwindigkeit ($v_k$) der zweiten Transporteinheit (TEk) abgesenkt werden kann, sodass zwischen der ersten Transporteinheit (TEi) und zweiten Transporteinheit (TEk) ein Sicherheitsabstand (S), der sich aus der konkreten kinematischen Umsetzung des Stillstandsmanövers (SMi) ergibt, eingehalten wird.

10. Verfahren nach Anspruch 9, **dadurch gekennzeichnet, dass** für die erste Transporteinheit (TEi) aus der Kenntnis der kinematischen Umsetzung des Stillstandsmanövers (SMi) ein Geschwindigkeitspunkt ($p_i(v_i=v_G)$) oder ein Angleichsweg ($\gamma_i$) berechnet wird und damit ermittelt wird, ob die Geschwindigkeit ($v_i$) der ersten ransporteinheit (TEi) auf die Geschwindigkeit ($v_k$) der zweiten Transporteinheit (TEk) abgesenkt werden kann.

11. Verfahren nach Anspruch 9 oder 10, **dadurch gekennzeichnet, dass** zusätzlich zum Sicherheitsabstand (S) ein einzuhaltender Mindestabstand (M) berücksichtigt wird.

## Claims

1. A method for operating a transport assembly (1) in the form of a long stator linear motor, in which a plurality of transport units (TEi) are moved along a transport path (2), wherein the movement of the transport units (TEi) along the transport path (2) is controlled by setting setpoints (S) of movement through at least one transport unit control (3), **characterized in that** for at least one first transport unit (TEi) it is preemptively determined, if for the transport unit (TEi) a stopping maneuver (SMi) with a predetermined cinematic may be executed, so that

    a) a collision of this transport unit (TEi) with a preceding second transport unit (TEk) or with a barrier (B) of the transport path (2) is avoided, or
    b) exceeding of a predetermined local speed limitation ($v_G$) in a position ($p_G$) of the transport path (2) by the first transport unit (TEi) is avoided, or
c) a matching movement of the first transport unit (TEi) to a speed ($v_k{}^*$) of a preceding second transport unit (TEk) is possible,

**and that** the stopping maneuver (SMi) of the first transport unit (TEi) is effectively activated, when at least one of these conditions is violated.

2. The method according to claim 1, **characterized in that** for the preceding second transport unit (TEk) a stopping maneuver (SMk) is assumed and it is checked, if the first transport unit (TEi) during an assumed stopping maneuver (SMi) gets too close to the second transport unit (TEk).

3. The method according to claim 2, **characterized in that** for the first transport unit (TEi) and for the second transport unit (TEk) on the basis of the knowledge of the cinematic implementation of the respective stopping maneuver (SMi, SMk) a stopping point ($p_i(v_i=0)$, $p_k(v_k=0)$) or a stopping distance ($\rho_i$, $\rho_k$) is calculated and these are compared, in order to determine, if the first transport unit (TEi) and the second transport unit (TEk) get too close to each other.

4. The method according to claim 1, **characterized in that** it is checked, if the first transport unit (TEi) during an assumed stopping maneuver (SMi) gets too close to the barrier (B).

5. The method according to any of claims 2 to 4, **characterized in that** a minimum distance (M) is set, which indicates how close the transport unit (TEi) can get to the preceding transport unit (TEk) or the barrier (B).

6. The method according to claim 1, **characterized in that** it is checked, if the speed ($v_i$) of the first transport unit (TEi) during an assumed stopping maneuver (SMi) may be reduced from a current actual speed ($v_i{}^*$) to a limit speed ($v_G$) set by the speed limitation, without the first transport unit (TEi) getting too close to the defined area of speed limitation.

7. The method according to claim 6, **characterized in that** for the first transport unit (TEi), from the knowledge of the cinematic implementation of the stopping maneuver (SMi) a speed point ($p_i(v_i=v_G)$) or a braking distance ($\rho_i$) is calculated and it is determined if the speed ($v_i$) of the transport unit (TEi) may be reduced to the limit speed ($v_G$) before the area of speed limitation.

8. The method according to claim 6 or 7, **characterized in that** a minimum distance (M) is set, which indicates how close the transport unit (TEi) may get to the area of speed limitation.

9. The method according to claim 1, **characterized in that** it is checked, if the speed ($v_i$) of the first transport unit (TEi) in case of an assumed stopping maneuver (SMi) may be reduced from a current actual speed ($v_i{}^*$) to a speed ($v_k$) of the second transport unit (TEk), so that between the first transport unit (TEi) and the second transport unit (TEk) a safety distance (S) is maintained, which is obtained from the concrete cinematic implementation of the stopping maneuver (SMi).

10. The method according to claim 9, **characterized in that** for the first transport unit (TEi), from the knowledge of the cinematic implementation of the stopping maneuver (SMi) a speed point ($p_i(v_i=v_G)$) or a matching distance ($\rho_i$) is calculated and it is determined if the speed ($v_i$) of the first transport unit (TEi) may be reduced to the speed ($v_k$) of the second transport unit (TEk).

11. The method according to claim 9 or 10, **characterized in that** in addition to the safety distance (S) a minimum distance (M) to be maintained is considered.

**Revendications**

1. Procédé de fonctionnement d'un dispositif de transport (1) en forme de moteur linéaire à stator long, dispositif de transport dans lequel plusieurs unités de transport (TEi) sont déplacées le long d'une ligne de transport (2), dans lequel le déplacement des unités de transport (TEi) le long de la ligne de transport (2) est régulé par des valeurs de consigne (S) prédéfinies du déplacement par au moins une commande d'unité de transport (3), **caractérisé en ce qu'**on détermine à l'avance, pour au moins une première unité de transport (TEi), si une manœuvre d'arrêt (SMi) peut être effectuée à l'aide d'une cinématique prédéfinie, pour l'unité de transport (TEi), de sorte

a) qu'une collision de ladite unité de transport (TEi) avec une seconde unité de transport (TEk) se déplaçant devant elle ou avec une barrière (B) de la ligne de transport (2) soit empêchée, ou
b) que le dépassement d'une limitation de vitesse locale prédéfinie ($v_G$) en un point ($p_G$) de la ligne de transport (2) par la première unité de transport (TEi) soit empêché, ou
c) qu'un déplacement d'alignement de la première unité de transport (TEi) à la vitesse ($v_k{}^*$) d'une seconde unité de transport (TEk) se déplaçant devant elle soit possible, **et en ce que** la manœuvre d'arrêt (SMi) de la première unité de transport (TEi) est effectivement lancée si au moins l'une de ces conditions est violée.

**2.** Procédé selon la revendication 1, **caractérisé en ce que** l'on suppose une manœuvre d'arrêt (SMk) pour la seconde unité de transport (TEk) se déplaçant devant elle, et **en ce que** l'on vérifie si la première unité de transport (TEi) s'approche trop de la seconde unité de transport (TEk) dans le cas d'une manœuvre d'arrêt (SMi) supposée.

**3.** Procédé selon la revendication 2, **caractérisé en ce que** l'on calcule un point d'arrêt ($\rho_i(v_i=0)$, $\rho_k(v_k=0)$) ou une voie d'arrêt ($\rho_i$, $\rho_k$) respectivement pour la première unité de transport (TEi) et pour la seconde unité de transport (TEk) à partir de la connaissance de la mise en œuvre cinématique de la manœuvre d'arrêt (SMi, SMk) respective, et **en ce que** l'on les compare afin de déterminer si la première unité de transport (TEi) et la seconde unité de transport (TEk) s'approchent trop l'une de l'autre.

**4.** Procédé selon la revendication 1, **caractérisé en ce que** l'on vérifie si la première unité de transport (TEi) s'approche trop de la barrière (B) dans le cas d'une manœuvre d'arrêt (SMi) supposée.

**5.** Procédé selon l'une des revendications 2 à 4, **caractérisé en ce qu'**une distance minimale (M) est spécifiée, laquelle distance minimale indique à quelle distance l'unité de transport (TEi) peut s'approcher de l'unité de transport (TEk) ou de la barrière (B) se déplaçant devant elle.

**6.** Procédé selon la revendication 1, **caractérisé en ce que** l'on vérifie si la vitesse ($v_i$) de la première unité de transport (TEi) peut être réduite d'une vitesse réelle actuelle ($v_i^*$) à une vitesse limite ($v_G$) spécifiée par la limitation de vitesse dans le cas d'une manœuvre d'arrêt (SMi) supposée sans que la première unité de transport (TEi) ne s'approche trop de la plage définie de la limitation de vitesse.

**7.** Procédé selon la revendication 6, **caractérisé en ce que** l'on calcule un point de vitesse ($\rho_i(v_i=v_G)$) ou une distance de freinage ($\varepsilon_i$) de la première unité de transport (TEi) à partir de la connaissance de la mise en œuvre cinématique de la manœuvre d'arrêt (SMi), et **en ce que** l'on détermine ainsi si la vitesse ($v_i$) de l'unité de transport (TEi) peut être réduite à la vitesse limite ($v_G$) avant la plage de la limitation de vitesse.

**8.** Procédé selon la revendication 6 ou 7, **caractérisé en ce que** l'on spécifie une distance minimale (M) qui indique à quelle distance l'unité de transport (TEi) peut s'approcher de la plage de la limitation de vitesse.

**9.** Procédé selon la revendication 1, **caractérisé en ce que** l'on vérifie si la vitesse ($v_i$) de la première unité de transport (TEi) peut être réduite d'une vitesse réelle actuelle ($v_i^*$) à une vitesse ($v_k$) de la seconde unité de transport (TEk) dans le cas d'une manœuvre d'arrêt (SMi) supposée, de sorte qu'une distance de sécurité (S), résultant de la mise en œuvre cinématique concrète de la manœuvre d'arrêt (SMi), est maintenue entre la première unité de transport (TEi) et la seconde unité de transport (TEk).

**10.** Procédé selon la revendication 9, **caractérisé en ce que**, pour la première unité de transport (TEi), l'on calcule un point de vitesse ($\rho_i(\rho_i=v_G)$) ou une voie d'alignement ($\gamma_i$) à partir de la connaissance de la mise en œuvre cinématique de la manœuvre d'arrêt (SMi), et **en ce que** l'on détermine ainsi si la vitesse ($v_i$) de la première unité de transport (TEi) peut être réduite à la vitesse ($v_k$) de la seconde unité de transport (TEk).

**11.** Procédé selon la revendication 9 ou 10, **caractérisé en ce que**, en plus de la distance de sécurité (S), une distance minimale (M) à maintenir est prise en compte.

# Fig. 1

Fig. 2

Fig. 3

Fig. 4

Fig. 5

Fig. 6

Fig. 7

Fig. 8

**EP 3 202 612 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8863669 B2